# EUROPÄISCHE PATENTSCHRIFT

(11) **EP 0 518 941 B1**
(45) Veröffentlichungstag und Bekanntmachung des Hinweises auf die Patenterteilung: **07.06.1995**
(21) Anmeldenummer: 91905614.3
(22) Anmeldetag: 02.03.1991
(51) Int. Cl.: H04N 9/77

(54) **FERNSEHGERÄT MIT GETRENNTER VERARBEITUNG VON LEUCHTDICHTESIGNAL UND FARBSIGNALEN**
TELEVISION SET WITH SEPARATE PROCESSING OF LUMINANCE SIGNALS AND CHROMINANCE SIGNALS
TELEVISEUR A TRAITEMENT SEPARE DU SIGNAL DE LUMINANCE ET DES SIGNAUX DE COULEUR

(30) Priorität: 07.03.1990 DE 4007094
(43) Veröffentlichungstag der Anmeldung: 23.12.1992
(73) Patentinhaber: Deutsche Thomson-Brandt GmbH, 78003 Villingen-Schwenningen (DE)
(72) Erfinder: KAADEN, Jürgen, D-7730 Villingen (DE)
(74) Vertreter: Einsel, Robert, Dipl.-Ing.
(86) Internationale Anmeldenummer: EP9100396
(87) Internationale Veröffentlichungsnummer: WO9114345

(56) Entgegenhaltungen:
- EP-A- 0 296 602
- DE-A- 3 423 113

## Beschreibung

Die Erfindung geht aus von einem Fernsehgerät mit getrennter Verarbeitung von Leuchtdichtesignal und Farbsignalen gemäß dem Oberbegriff des Anspruchs 1.

In derartigen Geräten hat in der Regel das Leuchtdichtesignal mit etwa 5 - 8 MHz eine größere Bandbreite als die Farbsignale mit etwa 1 MHz. Das bedeutet, daß das Leuchtdichtesignal innerhalb der Schaltung eine geringere Laufzeit als die Farbsignale hat. Bei der Bildwiedergabe indessen muß die richtige zeitliche Zuordnung von Leuchtdichtesignal und Farbsignalen wieder gewährleistet sein. Es ist daher notwendig, im Weg des Leuchtdichtesignals einen Laufzeitausgleich vorzusehen. Dafür ist eine zusätzliche Laufzeitleitung mit einer Laufzeit in der Größenordnung von 300 - 500 ns erforderlich. Dieses Problem tritt z.B. auf in Fernsehgeräten, Videorecordern, Camcordern, Kameras, Normenwandlern und Bildspeichern.

Fernsehgeräte der beschriebenen Art haben eine ständig zunehmende Bandbreite des Leuchtdichtesignals, insbesondere für HDTV-Systeme mit erhöhter Bildfrequenz oder Zeilenfrequenz. Außerdem werden die Farbsignale in getrennten Stufen mit relativ zum Leuchtdichtesignal verringerter Bandbreite verarbeitet. Dieser erhöhte Unterschied in der Bandbreite des Leuchtdichtesignals und der Farbsignale führt bei dem notwendigen Laufzeitausgleich zu Verzögerungsstufen mit erhöhter Bandbreite und erhöhter Verzögerungszeit, so daß der Aufwand für diesen Laufzeitausgleich ansteigt.

Der Erfindung liegt die Aufgabe zugrunde, den Schaltungsaufwand für die Laufzeitanpassung des Leuchtdichtesignals an die größere Laufzeit der Farbsignale zu verringern.

Diese Aufgabe wird durch die im Anspruch 1 angegebene Erfindung gelöst. Vorteilhafte Weiterbildungen der Erfindung sind in den Unteransprüchen angegeben.

Die Erfindung beruht auf folgender Überlegung. Für die notwendige Anpassung der Laufzeit ist es nicht unbedingt notwendig, das Leuchtdichtesignal zu verzögern. Der Laufzeitausgleich kann auch dadurch erzielt werden, daß die Farbsignale um den zu beseitigenden Laufzeitunterschied beschleunigt werden. Eine Beschleunigung, also zeitliche Vorverlegung eines Signals erscheint indessen zunächst nicht möglich. Die ohnehin verwendeten digitalen Speicher bieten indessen die Möglichkeit, die Farbsignale um eine definierte Zeit beschleunigt gegenüber dem Leuchtdichtesignal auszulesen. Eine derartige Beschleunigung der Farbsignale ist gleichwertig mit der an sich notwendigen Verzögerung des Leuchtdichtesignals. Die ohnehin zu anderen Zwecken verwendeten Speicher werden also in vorteilhafter Weise für den notwendigen Laufzeitausgleich ausgenutzt. Das bisher notwendige diskrete Laufzeitglied im Weg des Leuchtdichtesignals in Form einer Laufzeitleitung, einer Spule oder einer CCD-Schaltung wird nicht mehr benötigt. Die Erfindung ist unter Zuhilfenahme von CCD-Leitungen auch in allen bisherigen, rein analog arbeitenden Geräten einsetzbar.

Der Vorteil des Wegfalls der Verzögerungsstufe im Weg des Leuchtdichtesignals ist besonders gravierend bei einem Leuchtdichtesignal mit erhöhter Bandbreite von 8 - 10 MHz für hochauflösende Systeme und bei starken Unterschieden in der Bandbreite des Leuchtdichtesignals und der Farbsignale, die zu hohen Laufzeitunterschieden führen.

Die Erfindung wird im folgenden anhand der Zeichnung an einem System mit digitalisierten Leuchtdichtesignalen und Farbsignalen beschrieben. Darin zeigen
- Fig. 1: ein Blockschaltbild für die Verarbeitung von Leuchtdichtesignal und Farbsignalen,
- Fig. 2: ein Impulsdiagramm zur Erläuterung der Wirkungsweise von Fig. 1 und
- Fig. 3: eine komplette Schaltung für das Blockschaltbild von Fig. 1.

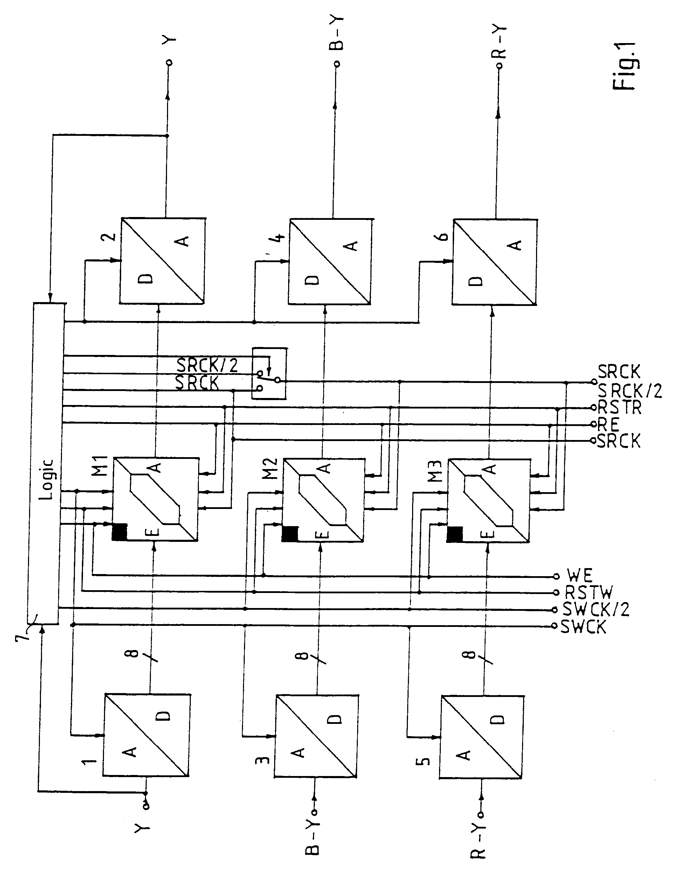

In Fig. 1 wird das Leuchtdichtesignal Y über den A/D-Wandler 1 dem digitalen Speicher M1 zugeführt, der über den D/A-Wandler 2 das Leuchtdichtesignal Y in einem anderen Zeitmaßstab liefert. Das Farbdifferenzsignal B-Y wird über den A/D-Wandler 3 dem digitalen Speicher M2 zugeführt, der über den D/A-Wandler 4 das Farbdifferenzsignal B-Y in einem veränderten Zeitmaßstab liefert. Entsprechend gelangt das Farbdifferenzsignal R-Y über den A/D-Wandler 5 an den digitalen Speicher M3, der über den D/A-Wandler 6 das entsprechend modifizierte Farbdifferenzsignal R-Y liefert. Die Speicher M1, M2, M3 werden von der Logik 7 gesteuert, die unter anderem Synchronimpulsabtrennstufen zur Steuerung der dargestellten Speicher und Wandler enthält.

Die Speicher M2, M3 werden von der Logik 7 während der Vertikalaustastzeit mit einer erhöhten Taktrate ausgelesen. Dadurch werden die Farbdifferenzsignale B-Y und R-Y an den Ausgängen der Wandler 4, 6 gegenüber dem Leuchtdichtesignal Y am Ausgang des D/A-Wandlers 2 beschleunigt. Diese Beschleunigung entspricht dem an sich auftretenden Laufzeitunterschied zwischen Y einerseits und B-Y und R-Y andererseits. Dieser Laufzeitunterschied wird daher ausgeglichen, so daß die Signale Y, B-Y und R-Y an den Ausgängen zeitlich übereinstimmen. Ein gesondertes Laufzeitglied im Weg von Y ist nicht erforderlich.

Die Schaltung nach Fig. 1 stellt einen Bildspeicher dar, der eine Aufwärtskonvertierung zwischen einem System mit einer Bildfrequenz von 50 Hz und einer Zeilenfrequenz von 16 kHz durch Taktverdopplung auf ein System mit einer Bildfrequenz von 100 Hz und einer Zeilenfrequenz von 32 kHz durchführt, wobei alle Ausgangssignale in der Frequenz verdoppelt sind. Die Speicher M1, M2, M3 sind 1 Mbit Videomemories, die als FIFO's organisiert sind. Die Information wird jeweils während eines Halbbildes (20 ms) mit einer Taktfrequenz von 12,5 MHz in die Speicher M1, M2, M3 eingeschrieben. Zum Auslesen ist ein Quarztakt angelegt, der die doppelte Frequenz, also 25 MHz, aufweist.

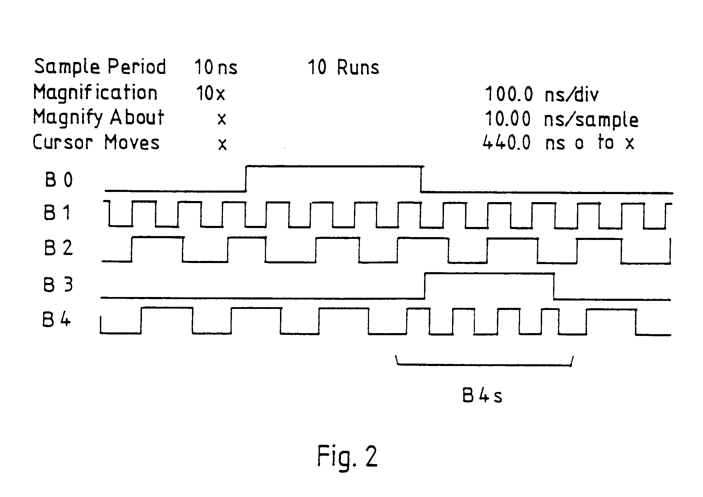

In Fig. 2 bedeuten
- B0: das Rücksetzsignal für die Speicher M1, M2, M3,
- B1: den Takt für den Speicher M1 für Y,
- B2: den Normaltakt für die Speicher M2, M3 für die Farbdifferenzsignale. B2 ist dabei das in der Frequenz durch 2 geteilte Signal B1,
- B3: das nach Ablauf des Rücksetzsignals erzeugte Schaltsignal für die Taktbeschleunigung bei den Farbsignalen und
- B4: den Takt für die Speicher M2, M3 für die Farbdifferenzsignale. Erkennbar ist die vorübergehende Einschachtelung der höherfrequenten Takte B4s während der High-Zeit von B3.

Die Speicher M2, M3 werden beim Auslesen mit Beginn des Vertikalsynchronimpulses zurückgesetzt, der aus dem wiedergegebenen Signal Y durch die Impulsabtrennung gewonnen wird. Im Anschluß an diesen Rücksetzimpuls wird an die Speicher M2, M3 für kurze Zeit der dargestellte, in der Frequenz verdoppelte Takt B4s angelegt.

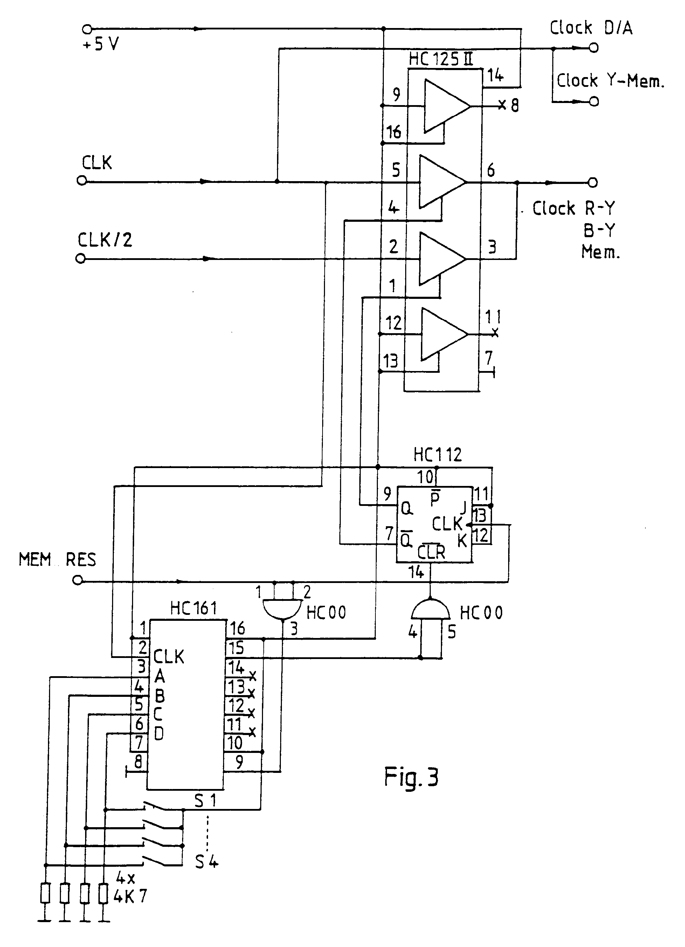

Fig. 3 zeigt die vollständige Schaltung. Das Flip-Flop HC112 wird mit der negativen Flanke von BO in den aktiven Zustand Q = H versetzt. Gleichzeitig wird der programmierbare Zähler HC161 am Pin 9 auf einen mit Hilfe der Schalter S1 - S4 gewählten Wert voreingestellt. Mit jedem Taktimpuls an Pin 2 wird der Zählerstand dekrementiert, bis bei O am Pin 15 ein Überlaufimpuls auftritt. Dieser kippt das Flip-Flop HC112 in den inaktiven Zustand Q = L. Mit den Ausgangssignalen des Flip-Flop HC112 wird direkt der Baustein HC125/II angesteuert, der als Multiplexer arbeitet und einen der beiden Takte auswählt.

## Patentansprüche

1. Fernsehgerät mit getrennter Verarbeitung von Leuchtdichtesignal (Y) und Farbsignalen (B-Y, R-Y), bei dem die Signale in Speicher (M) geschrieben und ausgelesen werden und zur Laufzeitanpassung eine relative Verzögerung des Leuchtdichtesignals gegenüber den Farbsignalen erfolgt, **dadurch gekennzeichnet**, daß die relative Verzögerung des Leuchtdichtesignals (Y) dadurch erfolgt, daß die Farbsignale (R-Y, B-Y) während eines im Bild nicht sichtbaren Zeitraums mit erhöhter Geschwindigkeit aus den Speichern (M2, M3) ausgelesen werden.

2. Fernsehgerät nach Anspruch 1, **dadurch gekennzeichnet**, daß das Auslesen mit erhöhter Geschwindigkeit während der Zeilen - und/oder Vertikalaustastzeit erfolgt.

3. Fernsehgerät nach Anspruch 1, **dadurch gekennzeichnet**, daß aus dem Vertikalsynchronimpuls ein Impuls abgeleitet wird, der den Auslesetakt (B4) für die Farbsignale (B-Y, R-Y) vorübergehend erhöht (B4s in Fig. 2).

4. Fernsehgerät nach Anspruch 1, **dadurch gekennzeichnet**, daß der Auslesetakt (B4) für die Speicher (M2, M3) für die Farbsignale (R-Y, B-Y) vorübergehend verdoppelt ist. (Fig. 2).

## Claims

1. Television device with separate processing of luminance signal (Y) and colour signals (B-Y, R-Y) in which the signals are written into memories (M) and read out and a relative delay of the luminance signal as against the colour signals occur for the purpose of transit time compensation, characterized in that the relative delay of the luminance signal (Y) occurs in that the colour signals (R-Y, B-Y) are read out from the memories (M2, M3) at an increased speed during a time period which is not visible in the picture.

2. Television device according to claim 1, characterized in that the reading out at increased speed occurs during the line and/or vertical blanking interval.

3. Television device according to claim 1, characterized in that an impulse is derived from the vertical sync pulse which temporarily increases the reading out clock pulse (B4) for the colour signals (B-Y, R-Y) (B4s in Fig.2).

4. Television device according to claim 1, characterized in that the read out clock pulse (B4) for the memories (M2, M3) for the colour signals (R-Y, B-Y) is temporarily doubled (Fig.2).

## Revendications

1. Téléviseur à traitement séparé du signal de luminance (Y) et des signaux de chrominance (B-Y, R-Y), dans lequel les signaux sont inscrits et lus dans des mémoires (M), un retard relatif du signal de luminance étant réalisé par rapport aux signaux de chrominance pour une compensation du temps de transit, **caractérisé en ce que** le retard relatif du signal de luminance (Y) est obtenu par une lecture à vitesse augmentée des signaux de chrominance (R-Y, B-Y) dans les mémoires (M2, M3) pendant un temps non visible dans l'image.

2. Téléviseur selon la revendication 1, **caractérisé en ce que** la lecture à vitesse augmentée est effectuée pendant le temps d'effacement des lignes et/ou vertical.

3. Téléviseur selon la revendication 1, **caractérisé en ce qu'**une impulsion qui augmente temporairement le rythme de lecture (B4) pour les signaux de chrominance (B-Y, R-Y) (B4s en figure 2) est dérivée de la synchronisation verticale.

4. Téléviseur selon la revendication 1, **caractérisé en ce que** le rythme de lecture (B4) pour les mémoires (M2, M3) est temporairement doublé (figure 2) pour les signaux de chrominance (R-Y, B-Y).
